# EUROPÄISCHE PATENTSCHRIFT

(11) **EP 1 316 008 B1**
(45) Veröffentlichungstag und Bekanntmachung des Hinweises auf die Patenterteilung: **15.09.2004**
(21) Anmeldenummer: 01943397.8
(22) Anmeldetag: 17.05.2001
(51) Int. Cl.: G06F 1/00

(54) **DATENNETZ-ZUGRIFFSKONTROLLE**
DATA NETWORK ACCESS CONTROL
SYSTEME DE CONTROLE D'ACCES A UN RESEAU DE DONNEES

(30) Priorität: 17.05.2000 DE 10024234
(43) Veröffentlichungstag der Anmeldung: 04.06.2003
(73) Patentinhaber: SFC Security For Children AG, 81369 München (DE)
(72) Erfinder: MASSECK, Stefan, 80638 München (DE)
(74) Vertreter: VOSSIUS & PARTNER
(86) Internationale Anmeldenummer: PCT/EP2001/005677
(87) Internationale Veröffentlichungsnummer: WO 2001/088672

(56) Entgegenhaltungen:
- WO-A-99/54827
- US-A- 5 884 033
- US-A- 5 987 606
- "Development and Operation of the Next-Generation Rating/Filtering System on the Internet" ELECTRONIC NETWORK CONSORTIUM: PRESS RELEASE, [Online] 30. April 1999 (1999-04-30), Seiten 1-4, XP002219058 Gefunden im Internet: <URL:http://www.nmda.or.jp/enc/rating2nd-e n.html> [gefunden am 2002-10-30]
- RESNICK P ET AL: "PICS: INTERNET ACCESS CONTROLS WITHOUT CENSORSHIP" COMMUNICATIONS OF THE ASSOCIATION FOR COMPUTING MACHINERY, ASSOCIATION FOR COMPUTING MACHINERY. NEW YORK, US, Bd. 39, Nr. 10, 1. Oktober 1996 (1996-10-01), Seiten 87-93, XP000642207 ISSN: 0001-0782

## Beschreibung

Die Erfindung betrifft eine Datennetz-Zugriffskontrolle, insbesondere eine Datennetz-Kindersicherung, und insbesondere Verfahren für den Schutz von Kindern und Jugendlichen vor kinder- und jugendgefährdenden Inhalten im Internet, sowie insbesondere Verfahren, die einen kontrollierten Zugriff auf Datennetze am Arbeitsplatz bereitstellen.

In den vergangenen Jahren gewann das Internet immer mehr an Bedeutung, und die Zahl der Menschen, die auf das Internet zugreifen können wird in den nächsten Jahren mit noch steigender Tendenz zunehmen. Neben der zunehmenden weltweiten Vemetzung der Bevölkerung nimmt auch das im Internet bereitgestellte Informationsangebot ständig zu. Das Internet bietet Zugang zu einem breiten Spektrum an Informationen zu den unterschiedlichsten Themengebieten. Zunehmend gewinnt dabei auch die Möglichkeit an Bedeutung, über das Internet bequem von zuhause aus einzukaufen (sogenannter e-Commerce).

In der Regel kann von einem privaten oder dienstlichen Internetanschluss aus auf alle weltweit im Internet zur Verfügung gestellte Informationen zugegriffen werden. Dabei stellt sich beispielsweise das Problem, dass Kinder und Jugendliche ohne weiteres - absichtlich oder versehentlich - auf kinder- und jugendgefährdende Internet-Seiten zugreifen können, oder beispielsweise leichtfertig über das Internet für sie attraktive Waren (beispielsweise Spielwaren, CDs etc.) bestellen können. Um dies zu unterbinden, können die Eltern den PC beispielsweise durch ein Paßwort sichern. Dies verhindert ein unkontrolliertes Surfen oder Einkaufen im Internet jedoch nur, solange die Eltern das Paßwort geheim halten. Außerdem ist dies mit dem Nachteil verbunden, dass dadurch den Kindern und Jugendlichen jeglicher Zugang zum Internet verwehrt ist.

Ein weiteres Problem ist, dass an Arbeitsplätzen mit Internetanschluss die Mitarbeiter privat im Internet surfen und Privatangelegenheiten (Einkäufe, Bankgeschäfte etc.) erledigen können.

Die US-A-6 065 056 offenbart eine Internetsicherung, die eine Schlagwortsuche dadurch einschränkt, dass eine Datenbank mit gesperrten Begriffen abgefragt wird und die Verwendung des eingegebenen Schlagwortes unterbunden wird, wenn dieses in der Datenbank gefunden wird.

Die US-A-5 884 033 beschreibt ein Internet-Filtersystem. Auch bei diesem System werden übertragene Daten bzw. Nachrichten anhand einer Filter-Datenbank blockiert.

Demgegenüber liegt der Erfindung die Aufgabe zugrunde, eine verbesserte Datennetz-Zugriffskontrolle, wie etwa eine Datennetz-Kindersicherung bereitzustellen. Diese Aufgabe wird mit den Merkmalen der unabhängigen Ansprüche gelöst.

Gemäß einem ersten Aspekt der vorliegenden Erfindung wird eine Datennetz-Suchmaschine bereitgestellt, die ausschließlich zugriffsberechtigte Domänen bzw. Seiten, vorzugsweise kinder- und jugendfreie Domänen bzw. Seiten berücksichtigt. Das Datennetz ist beispielsweise das Internet oder ein Extranet.

Die in einer erfindungsgemäßen Internet-Suchmaschine gespeicherten bzw. katalogisierten Internet-Domänen werden vor ihrer Aufnahme in die Suchmaschine auf gefährdende (z.B. kinder- und jugendgefährdende) Inhalte und Begriffe oder auf Privatnutzung hindeutende Domänen bzw. Seiten (etwa von Banken) überprüft. Dazu wird nicht nur der Name der Internet-Domäne, sondern vorzugsweise auch die einzelnen Seitennamen dieser Domäne, der Inhalt der einzelnen Seiten, die vorgesehenen Verbindungen und Linkadressen zu anderen Domänen und Seiten, sowie Skripts überprüft. Dies geschieht anhand einer Datenbank, die entsprechende kritische bzw. gefährdende (z.B. kinder- und jugendgefährdende) Begriffe enthält.

Dabei kann es sich beispielsweise um pornographische, um politisch extremistische, oder um militärische Begriffe handeln. Ferner handelt es sich dabei vorzugsweise um Begriffe des e-Commerce, die in Verbindung mit dem Einkaufen (etwa mittels Kreditkarte) im Internet verwendet werden. Die Namen der Domäne und der einzelnen Seiten, die Inhalte, Verbindungen, Linkadressen und Skripts der zu überprüfenden Domäne werden dazu gescannt und mit den Begriffen der Datenbank verglichen. Sofern eine überprüfte Internet-Domäne als "frei" (z.B. kinder- und jugendfrei) erkannt wird, also keine Übereinstimmung mit den Begriffen der Datenbank gefunden wurde, wird in den Code der überprüften Seiten eine Kennung eingefügt, die auf die vorgenommene Überprüfung hinweist. Vorzugsweise geschieht das Einfügen der Kennung automatisch nach,Abschluss der Überprüfung. Die so gekennzeichneten Seiten bzw. Domänen werden anschließend in der erfindungsgemäßen Internet-Suchmaschine registriert bzw. gespeichert. Vorzugsweise geschieht dies sortiert nach Themenbereichen und Altersfreigabe-Stufen (beispielsweise ab 6, 12, 16 Jahren), oder Stellung des Mitarbeiters im Unternehmen.

Im Falle einer Datennetz-Kindersicherung wird so für jede Altersstufe eine eigene Kinder-Internetwelt erstellt, die nur diese Domänen bzw. Seiten enthält, die aus dem gesamten Internet für diese Altersstufe herausgefiltert wurden.

Die Verwendung dieser erfindungsgemäßen Datennetz-Suchmaschine bietet eine Sicherung dahingehend, dass lediglich auf registrierte und damit überprüfte Domänen bzw. Inhalte zugegriffen werden kann. Sofern sich der Seiteninhalt nach deren Freigabe wieder ändert, wird der zuvor eingefügte Code bei einer automatischen und regelmäßigen Überprüfung wieder entfernt.

Gemäß einem zweiten Aspekt der vorliegenden Erfindung werden bereits im Datennetz (z. B. Internet) vorhandene und/oder neu hinzukommende Domänen regelmäßig und automatisch nach kritischen Inhalten und Begriffen durchsucht. Vorzugsweise werden dazu Suchroboter verwendet. Diese Suchroboter liefern die in den durchsuchten Namen der Domänen bzw. Seiten, Seiteninhalten, Hyperlinks und Skripts verwendeten Begriffe mit Angaben zur Häufigkeit der Verwendung und deren Gefährdungsgrad über ein Kommunikationsnetzwerk, beispielsweise das Internet, an eine Datensammelstation. Ein Vergleich der untersuchten Domänen mit den Begriffen der Datenbank liefert kritische Internet-Adressen. Die Namen der gefundenen Internet-Domänen werden in der Datensammelstation gespeichert und vorzugsweise auf neue Begriffe hin untersucht, die sich noch nicht in der Datenbank kinder- und jugendgefährdender Begriffe befinden. Dadurch läßt sich die Datenbank kontinuierlich erweitern.

Gemäß einem weiteren Aspekt der vorliegenden Erfindung wird eine Zugriffskontrolle bzw. Kindersicherung in der Form bereitgestellt, dass bei der Initiierung einer Suche nach einem von einem Benutzer in eine herkömmliche Suchmaschine (z.B. LYCOS™) eingegebenen Begriff der eingegebene Begriff automatisch mit kritischen bzw. gefährdenden Begriffen einer Datenbank abgeglichen wird, noch bevor die Suche beginnt. Sofern der eingegebene Suchbegriff in dieser Datenbank ermittelt wird, wird die initiierte Suche automatisch abgebrochen und automatisch die erfindungsgemäße Suchmaschine gemäß dem ersten Aspekt aktiviert, die lediglich unkritische, beispielsweise kinder- und jugendfreie, Inhalte bzw. Domänen enthält. In einer alternativen Ausführungsform wird die erfindungsgemäße Suchmaschine automatisch aktiviert, sobald in einem herkömmlichen Internet-Browser direkt der Name einer Domäne (z.B. www.xyz.de) oder einer speziellen Seite eingegeben wird und dieser Name einen Begriff enthält, der in der bereitgestellten Datenbank enthalten ist. Der Vergleich mit den Begriffen der Datenbank findet unmittelbar nach der Eingabe des Namens der aufzurufenden Domäne statt. Dies bewirkt, dass die ausgewählte Seite gar nicht erst aufgerufen wird wenn sich herausstellt, dass diese kritisch ist. Auch in dieser Ausführungsform wird also die eingegebene Internet-Adresse überprüft, d.h. mit den Begriffen der Datenbank verglichen, bevor diese Domäne bzw. Seite aufgerufen wird. Kinder werden somit beispielsweise je nach Altersstufe auf altersgerechte Seiten umgeleitet bzw. beschränkt. Ab diesem Zeitpunkt steht das Datennetz nur noch eingeschränkt zur Verfügung, nämlich nur noch die in der erfindungsgemäßen Suchmaschine registrierten Domänen/Seiten.

Erfindungsgemäß wird nicht nur der Name einer Internet-Domäne überprüft, sondern ebenfalls die einzelnen Seiten dieser Domäne. Dies hat den Vorteil, dass bei unkritischen Domänen die kritischen bzw. gefährdenden Seiten dieser Domäne automatisch gesperrt werden können, während unkritische Seiten nach wie vor für Kinder und Jugendliche zugänglich sind. Beispielsweise kann so in dem virtuellen Katalog eines Versandhauses geblättert werden, ohne jedoch zu den Seiten zu gelangen, die eine Bestellung von Waren ermöglichen. Ferner kann auf diese Weise beispielsweise das Herunterladen von Informationen auf den eigenen PC oder das Versenden von e-Mails verhindert werden.

Das automatische Einbringen einer Kennung in den Code der Seiten der geprüften Domänen der erfindungsgemäßen Datennetz-Suchmaschine (beispielsweise Internet-Suchmaschine) wird erfindungsgemäß als elektronisches Siegel angesehen, anhand dessen geprüfte und freigegebene Internet-Domänen bzw. Seiten erkannt werden können. Vorzugsweise wird zusätzlich zu dem elektronischen Siegel in die Internet-Domäne, beispielsweise in die Homepage, ein optisches Siegelelement ("Label") eingefügt ("Pagelabelling"), so dass vom Benutzer direkt bei Aufruf der Homepage zu erkennen ist, dass es sich um eine überprüfte und freie Domäne handelt.

Erfindungsgemäß werden die bereits geprüften und in der erfindungsgemäßen Suchmaschine registrierten Domänen bzw. Seiten regelmäßig erneut überprüft, um dadurch Siegelverletzungen festzustellen. Dazu weist die Internet-Domäne erfindungsgemäß ein Skript auf, welches nach Aufruf der Seite eine Registrierung (beispielsweise das elektronische Siegel) an die Datensammelstation meldet. Daraufhin wird erfindungsgemäß überprüft, ob diese Domäne in der Internet-Suchmaschine noch als jugendfrei eingetragen ist und wann die letzte Überprüfung stattgefunden hat. Je nach Häufigkeit der Seitenaufrufe in den eingetragenen Domänen werden die aufgerufenen Seiten erneut überprüft. Dies bedeutet, dass eine häufig aufgerufene Domäne öfter überprüft wird als eine selten aufgerufene Seite. Führt die Überprüfung zu einem negativen Ergebnis, werden das elektronische und optische Siegel wieder entfern (Pagelabel-Entzug).

Als weiterer Aspekt der erfindungsgemäßen Zugriffskontrolle, vorzugsweise Kindersicherung, wird ein Internet-Browser bereitgestellt, der herkömmlichen Browsem vorgeschaltet bzw. aufgesetzt ist. Beim Aufruf des erfindungsgemäßen Browsers wird die Zugriffskontrolle aktiviert. Im Falle eine Kindersicherung bedeutet dies, dass lediglich die Datenbank mit kinder- und jugendgefährdenden Begriffen zur Verfügung gestellt wird. Der erfindungsgemäße Browser verlangt zuerst die Vorgabe eines Anwenderprofils (beispielsweise Anfänger, Anwender, Profi, oder Altersstufe: 6, 12, 16 Jahre). Durch die Vorgabe eines solchen Anwenderprofils werden die vom Browser für den Benutzer zur Verfügung gestellten Funktionen und Eingabemöglichkeiten spezifiziert bzw. freigegeben/gesperrt (z.B. Versenden von e-Mails). Ferner werden entsprechend einer zugehörigen Altersfreigabe dem Browser entsprechende Sicherheitsdatenbanken mit kinder- und jugendgefährdenden Begriffen zugeordnet. Mit diesen Sicherheitsdatenbanken sperrt der erfindungsgemäße Browser Eingaben des Benutzers und Seiteninhalte von Internet-Domänen entsprechend den durch das Anwenderprofil spezifizierten Altersstufen. Wird im erfindungsgemäßen Browser ein Begriff eingegeben, der in einer der Sicherheitsdatenbanken enthalten ist, wird die Internetdarstellung der aufgerufenen bzw. gesuchten Seite automatisch gesperrt und automatisch auf die erfindungsgemäße Suchmaschine umgeschaltet. Dabei wird die Historie im Browser gelöscht.

In einer bevorzugten Ausführungsform erkennt die erfindungsgemäße Internet-Kindersicherung die von der FSK (Freiwillige Selbstkontrolle) vergebene Altersfreigabe-Kennung (z.B. FSK 16) in Film-Trailern oder ganzen Filmen, die über das Internet zur Verfügung gestellt werden. Trailer, deren FSK-Kennung nicht dem Anwenderprofil entspricht, werden nicht aufgerufen und sind nicht downloadbar.

Vorzugsweise findet die Kontrolle erfindungsgemäß innerhalb folgender Komponenten statt:
- Namen von Domänen bzw. Seiten (z.B. www.sex.de oder www.xyz.de/sex.html, etc.);
- Inhalt der Seiten als HTML (hypertext mark-up language) ausgelesen (z.B. Informationen im head und Text der Seite, contents, etc.);
- Verbindungen und Linkadressen (Lesen von Links zu anderen Domänen und Seiten); und
- Skripts.

Durch die verschiedenen Teilaspekte der vorliegenden Erfindung (elektronisches Siegel; Datenbank; Suchmaschine; Browser; automatisches Aktivieren der Sicherheitssuchmaschine) ist gewährleistet, dass abhängig vom Anwenderprofil nur ein bedingter Zugriff auf das Internet möglich ist und alle Versuche, kritische bzw. gefährdende Informationen zu erhalten oder beispielsweise einzukaufen, werden unmittelbar unterbunden und die Internetbenutzung auf die Sicherheitssuchmaschine kanalisiert.

Vorzugsweise ist abhängig vom Alter des Benutzers eine Zeiterfassungseinrichtung vorgesehen, die die im Internet zugebrachte Zeit erfaßt. Nach Erreichen einer vorgegebenen Zeitgrenze wird die Verbindung automatisch unterbrochen. Eine entsprechende Zeitbegrenzung ist vorzugsweise bei der Zugriffskontrolle am Arbeitsplatz bereitgestellt.

Weiter bevorzugt ist erfindungsgemäß vorgesehen, den PC mit einer Authentifizierungseinrichtung auszustatten (beispielsweise Kamera, Fingerabdruckdetektor, etc.) Dies ermöglicht eine automatische und nicht umgehbare Erkennung des Benutzers und dessen entsprechenden Anwenderprofils.

Die erfindungsgemäße Zugriffskontrolle ist nicht an fest installierte Datennetz-Zugangsterminals (z.B. PC zu Hause oder am Arbeitsplatz) gebunden, sondern findet auch Verwendung bei Zugang zum Datennetz über mobile Terminals, wie etwa Mobiltelefone (mittels WAP bzw. entsprechender Nachfolgetechnologien) oder elektronischer Organizer.

Die Erfindung wird anhand der beigefügten Figuren näher erläutert. Es zeigen:
- Fig.1: eine schematische Darstellung der erfindungsgemäßen Datennetz-Zugriffskontrolle;
- Fig. 2: eine hierarchische Darstellung der erfindungsgemäßen Zugriffskontrolle (Kindersicherung);
- Fig. 3: eine hierarchische Darstellung der erfindungsgemäßen Zugriffskontrolle am Arbeitsplatz;
- Fig. 4: eine detaillierte Darstellung der benutzerabhängigen Zugriffskontrolle;
- Fig. 5: eine schematische Darstellung des erfindungsgemäßen Internet-Browsers; und
- Fig. 6: eine schematische Übersicht aller erfindungsgemäßen Aspekte der Datennetz-Zugriffskontrolle.

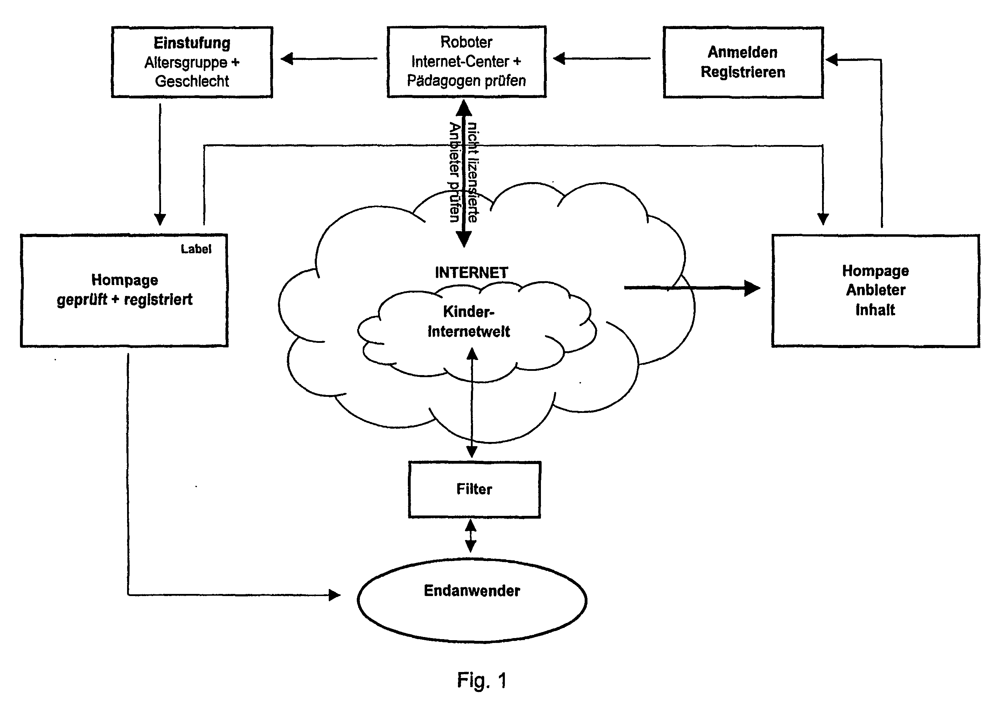

Fig. 1 zeigt in der Bildmitte symbolisch das Internet mit allen angebotenen Informationen/Domänen/Seiten. Wenn ein Inhaber einer spezifischen Intemet-Homepage Zutritt zu dem nur eingeschränkt verfügbaren Teil des gesamten Intemets (als "Kinder-Internetwelt" in Fig. 1 gekennzeichnet) anstrebt, wird die Domäne nach einem entsprechenden Registrierungsantrag überprüft. Anhand des Inhaltes dieser Domäne wird eine Alterseinstufung vorgenommen, und erfindungsgemäß der entsprechende Code der Domäne oder den einzelnen Seiten beigefügt. In einer bevorzugten Ausführungsform wird dies auch optisch durch Einfügung eines Labels (eines Siegels) kenntlich gemacht, so dass bei Aufruf der Seite sofort ersichtlich ist, dass die Seite überprüft und freigegeben ist. Der Endanwender ist dann lediglich in der Lage, über das erfindungsgemäße Filter auf die Kinder-Internetwelt zuzugreifen.

Gemäß einer bevorzugten Ausführungsform werden die noch nicht registrierten Anbieter von einem Suchroboter überprüft. Dies kann vorzugsweise durch eine manuell-pädagogische Prüfung ergänzt werden. Sofern dabei freie bzw. unkritische Domänen/Seiten von Anbietem gefunden werden, die noch nicht registriert sind, werden diese dem eingeschränkt verfügbaren Portal (Jugendportal) zugefügt.

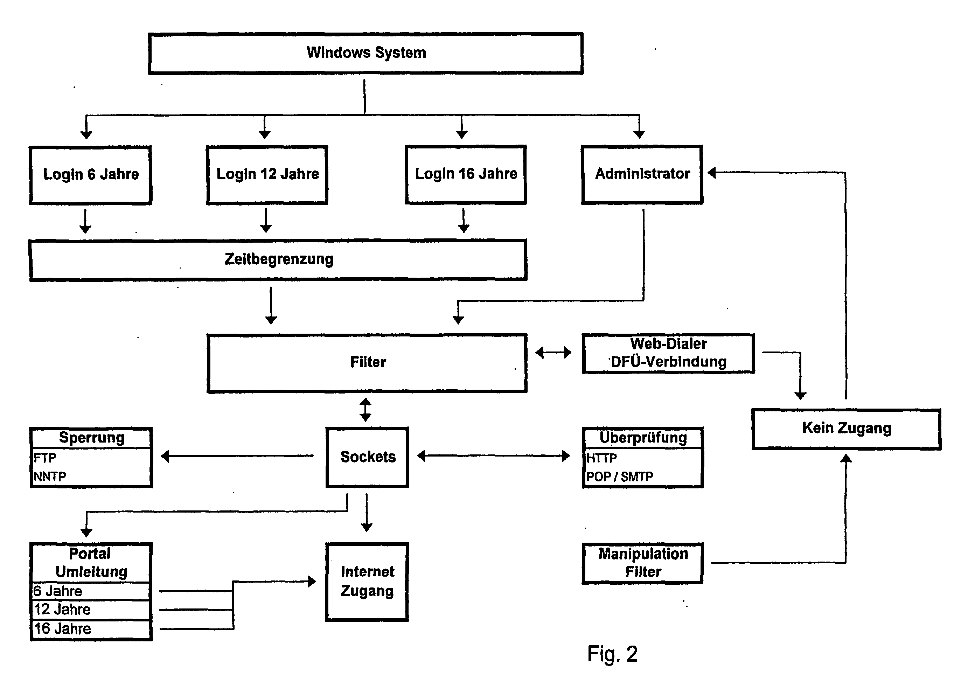

Bei einem herkömmlichen Windows™ System erfolgt zunächst eine Login-Abfrage, um entsprechende Voreinstellungen des Systems des Benutzers vorzunehmen, beispielsweise Alterstufe 6, 12 oder 16 Jahre, oder Administrator Fig. 2). Je nach Benutzerprofil wird vorzugsweise eine Zeitbegrenzung vorgegeben bzw. eingestellt Der Zugriff auf das Internet erfolgt dann nur über die erfindungsgemäße Zugriffskontrolle. Eingegebene Internet-Adressen oder email-Adressen werden überprüft (Überprüfung von http (HyperText Transfer Protocol), POP/SMTP (Simple Mail Transfer Protocol)). Sobald hier kritische Begriffe festgestellt werden, erfolgt eine Umleitung des Benutzers auf das dem Benutzerprofil (beispielsweise Alterstufe) entsprechende Portal.

Vorzugsweise ist auch eine Sicherungseinheit vorgesehen, die teure Einwahlnummern (Web Dialer) sperrt und denn Zugriff darauf verweigert.

Weiter bevorzugt führt der Versuch der Manipulation der erfindungsgemäßen Zugriffskontrolle zu einer Zugriffssperre. Diese kann lediglich durch den Administrator aufgehoben werden. Wenn ein Benutzer versucht, eine Datei der erfindungsgemäßen Zugriffskontrolle zu entfernen, wird der gesamte PC gesperrt und kann nur vom Administrator wieder entsperrt werden.

Die erfindungsgemäße Zugriffskontrolle filtert ein- und ausgehende Daten jeglicher Herkunft (email, Chat oder Internetseiten). Dazu wird auf die erfindungsgemäße Datenbank zugegriffen. Weitere bevorzugte Eigenschaften sind: Cache-Speicher leeren bei Benutzerwechsel; kontrollierte Downloads; kontrollierter Chatzugang; Unterbinden des Bootabbruchs von Windows (zur Manipulationssicherung); Unterbinden der Command-Ebene; Registrierungsaufruf unterbinden; automatisches update; Spieleseiten mit Zeitüberwachung- bzw. -limit; keine Weitergabe von Adressdaten und Telefonnummern für Kinder und Jugendliche; frei konfigurierbare Ausblendung von Werbung; Unterbinden von FTP (File Transfer Protocol) und sog. NetMeetings (Verbindung mehrer PCs im Internet mit Bild- und Tonübertragung mittels Webcams, Mikrofone und Lautsprecher).

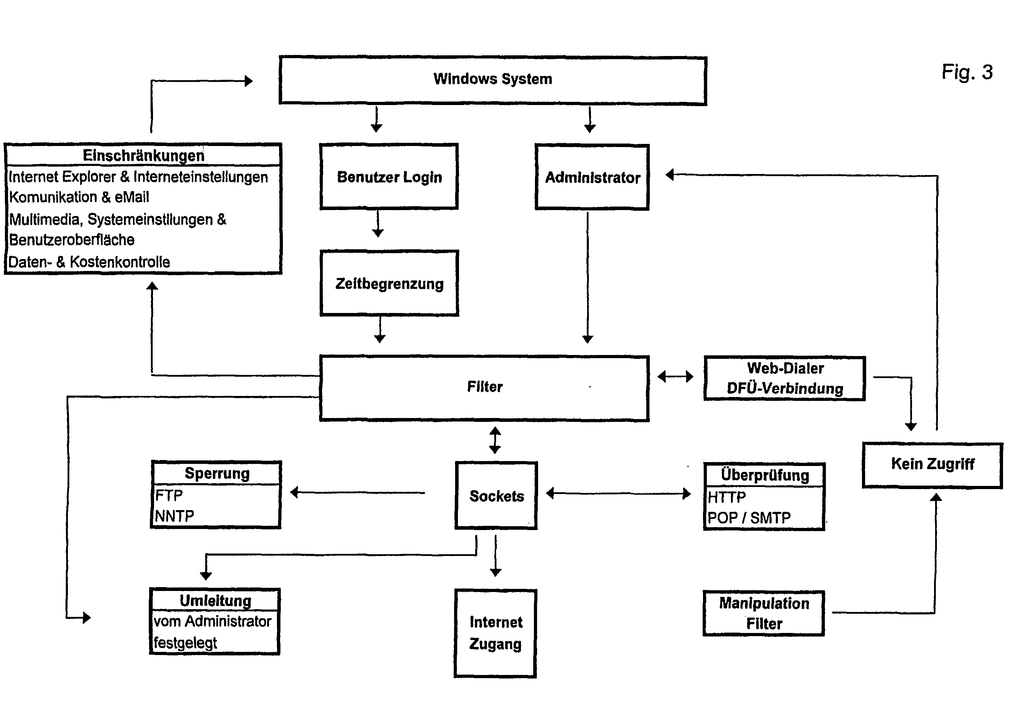

Auch das in Fig. 3 dargestellte erfindungsgemäße System ist unter Windows™ installiert. Es erfolgt zunächst eine Benutzerabfrage, um so ein spezifisches Benutzerprofil einzustellen. Alternativ erfolgt der Zugriff als Administrator. Auch in dieser Ausführungsform ist vorzugsweise eine Zeitbegrenzung vorgesehen. Über das erfindungsgemäße Filter/die erfindungsgemäße Zugriffskontrolle erfolgt der Zugang in das Internet. Bei Aufruf entsprechend kritischer bzw. für den Benutzer nicht zugänglicher Seiten erfolgt automatisch eine Umleitung auf die für das eingestellte Benutzerprofil freigegebenen Seiten. Dies ist vorteilhaft etwa in Schulen, um lediglich unterrichtsrelevante Seiten zugänglich zu machen. FTP und NetMeeting werden gesperrt.

Ferner ist in Fig. 3 dargestellt, wie abhängig vom Benutzerprofil Einschränkungen der Benutzungen vorgenommen werden, beispielsweise des Internet Explorers und dessen Interneteinstellungen, Mulimedia, Systemeinstellungen und der Benutzeroberfläche, Daten- und Kostenkontrolle. Dies stellt benutzerdefinierte lokale Einstellungen bereit.

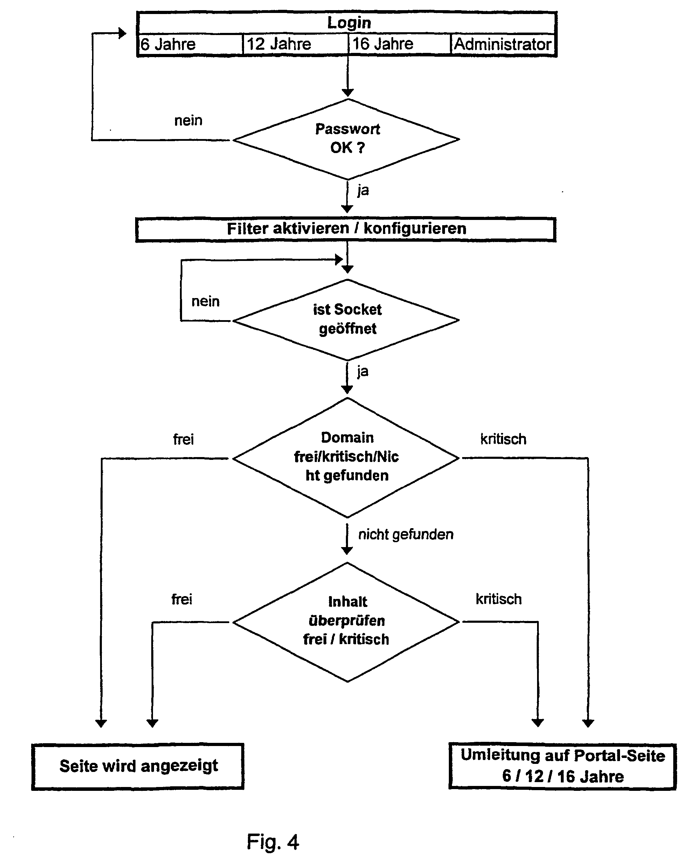

Fig. 4 zeigt in Form eines Flussdiagramms detailliert den Ablauf der erfindungsgemäßen Zugriffskontrolle am Beispiel einer Kindersicherung. Nach dem Login in ein bestimmtes Benutzerprofil (6, 12 oder 16 Jahre oder Administrator) und der Abfrage des dem Benutzerprofils zugeordneten Passwortes wird die erfindungsgemäße Zugriffskontrolle (Filter) aktiviert und konfiguriert. Zunächst erfolgt eine Abfrage, ob der Socket geöffnet ist. Sofern dies der Fall ist, wird nach Eingabe der vom Benutzer gewünschten Domäne deren Freigabe überprüft. Ist die gewünschte Domäne freigegeben, wird sie angezeigt. Andernfalls erfolgt automatisch die (Zwangs-)Umleitung auf die vom Benutzerprofil abhängige eingeschränkte Nutzung des Datennetzes. Entsprechendes erfolgt bei Überprüfung eines Seiteninhaltes. Ist die angeforderte Seite kritisch, erfolgt die Umleitung auf die freigegebenen Seiten.

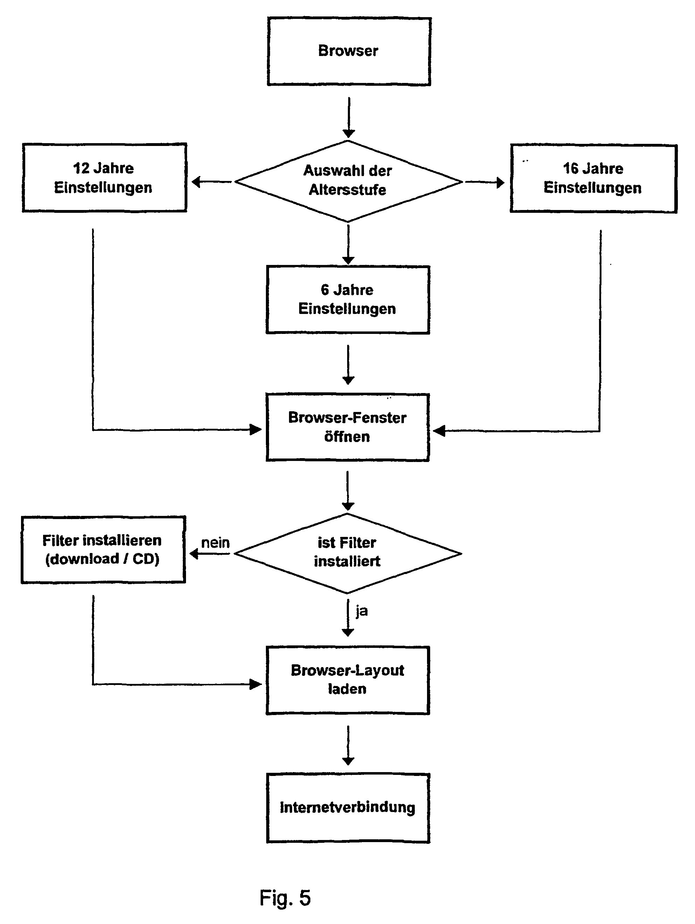

Bei Aufruf des erfindungsgemäßen Internet-Browsers erfolgt wie in Fig. 5 dargestellt zunächst eine Auswahl der Altersstufe des Benutzers. Danach erfolgt entsprechend der ausgewählten Altersstufe (evtl. passwortverknüpft) die Öffnung des Browser-Fensters. Danach erfolgt automatisch die Abfrage, ob die erfindungsgemäße Zugriffskontrolle (noch) installiert ist. Ist dies der Fall, wird das Browser-Layout geladen. Andernfalls wird der Benutzer zu Installation des Filters aufgefordert. Letztendlich wird die Internetverbindung hergestellt. Die Realisierung dieses erfindungsgemäßen Browsers erfolgt über ein Wechselspeichermedium.

Der in Fig. 5 dargestellte Aspekt stellt einen benutzerspezifischen Browser mit individueller und benutzerprofil-abhängiger Funktionsbelegung bereit. Dieser erfindungsgemäße Browser wird einem herkömmlichen Browser vorgeschaltet. Dieser benutzerspezifische Browser hat den Vorteil, dass abhängig von der Altersstufe (oder der Stellung in einem Betrieb) lediglich bestimmte ausgewählte Funktionen bereitgestellt bzw. gesperrt werden (z.B. email, Suchmaschinen etc). Ferner enthält der erfindungsgemäße Browser als Lesezeichen bereits vorbestimmte Internetadressen, auf die (und vorzugsweise nur die) der Benutzer zugreifen kann (beispielsweise LEGO™ für Kinder oder Domänen von Geschäftspartnern in Unternehmen).

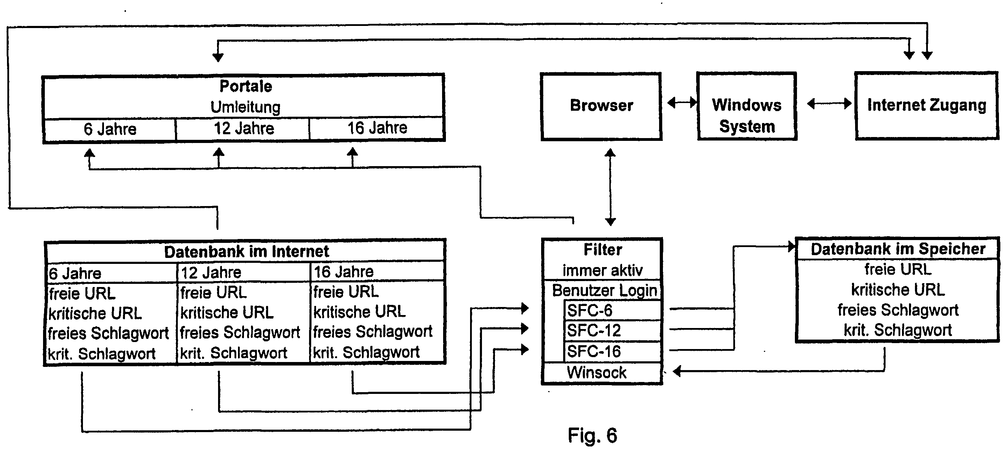

Fig. 6 zeigt schematisch die verschiedenen Aspekte der erfindungsgemäßen Datennetz-Zugriffskontrolle. Die verschiedenen Benutzerprofile (Portale) sind mit der Zugriffskontrolle (Filter) in Verbindung. Über dieses Filter erfolgt der Zugriff auf die Datenbank im Speicher, in der freie bzw. kritische URLs oder Schlagworte gespeichert sind. Entsprechende Datenbanken sind auch im Internet für die verschiedenen Benutzerprofile bereitgestellt. Der Internetzugang erfolgt über den erfindungsgemäßen Browser unter Windows™ oder über herkömmliche Browser, denen die Benutzerprofile aufgesetzt bzw. vorgeschaltet sind.

## Patentansprüche

1. Verfahren zum Aufbau einer Datennetz-Suchmaschine für autorisierte Datennetz-Domänen mit den Schritten:
a) Überprüfen einer Datennetz-Domäne auf nicht autorisierte Inhalte und/oder Begriffe;
b) Einbringung einer Kennung in den Code der überprüften Domäne; und
c) Registrieren der gekennzeichneten Domäne in der Datennetz-Suchmaschine,
wobei ferner ein optisches Siegelelement in die überprüfte Datennetz-Domäne eingebracht wird, um einem Benutzer die erfolgte Überprüfung anzuzeigen,
wobei die registrierten Datennetz-Domänen abhängig von der Häufigkeit des Domänenaufrufs regelmäßig emeut auf nicht autorisierte Inhalte und Begriffe überprüft werden.

2. Verfahren nach Anspruch 1, wobei nicht autorisierte Inhalte und/oder Begriffe kinder- und jugendgefährdende Begriffe sind.

3. Verfahren nach Anspruch 1 oder 2, wobei in Schritt a) der Name der Datennetz-Domäne, die Namen der einzelnen Seiten der Datennetz-Domäne, der Inhalt der einzelnen Seiten, Verbindungen und Linkadressen und Skripts überprüft werden.

4. Verfahren nach Anspruch 2 oder 3, wobei in Schritt a) eine Datenbank mit kinder- und jugendgefährdenden Begriffen verwendet wird.

5. Verfahren nach einem der Ansprüche 1 bis 4, wobei in Schritt b) eine Kennung in den Code jeder überprüften Seite eingebracht wird.

6. Verfahren nach einem der Ansprüche 1 bis 5, wobei die Kennung angibt, dass eine Überprüfung stattfand und es sich um eine autorisierte, insbesondere kinder- und jugendfreie Datennetz-Domäne handelt.

7. Verfahren nach einem der Ansprüche 1 bis 6, wobei in Schritt b) die Kennung automatisch eingebracht wird.

8. Verfahren nach einem der Ansprüche 1 bis 7, wobei in Schritt c) die überprüften und gekennzeichneten Domänen in der Datennetz-Suchmaschine nach Inhalten oder nach Benutzerprofilen, insbesondere Altersstufen gespeichert sind.

9. Verfahren nach Anspruch 1, wobei der Zeitpunkt der letzten Überprüfung der Domäne in der Datennetz-Suchmaschine gespeichert wird.

10. Verfahren nach einem der Ansprüche 1 bis 9, wobei das Datennetz das internet ist.

11. Verwendung einer gemäß Anspruch 1 bis 10 aufgebauten Datennetz-Suchmaschine, wobei die Datennetz-Suchmaschine automatisch aktiviert wird, sobald ein Benutzer nach nicht autorisierten Begriffen sucht.

12. Verfahren mit den Schritten:
a) Bereitstellen einer Datenbank mit nicht autorisierten Begriffen;
b) Vergleichen eines von einem Benutzer in eine Datennetz-Suchmaschine oder in einem Datennetz- Browser eingegebenen Begriffs oder Domain-Namens/Seiten-Namens mit den in der Datenbank gespeicherten Begriffen; und
c) automatisches Aktivieren einer separaten Datennetz-Suchmaschine, die nur überprüfte Domänen mit autorisierten Inhalten enthält, sobald der vom Benutzer eingegebene Begriff oder Name in der Datenbank gefunden wurde.

13. Verfahren nach Anspruch 12, wobei das automatische Aktivieren der separaten Suchmaschine erfolgt, bevor die vom Benutzer eingegebene Datennetz-Domäne bzw. -Seite aufgerufen ist.

14. Verfahren nach Anspruch 12 oder 13, wobei die separate Suchmaschine eine gemäß Anspruch 1 bis 10 aufgebaute Datennetz-Suchmaschine ist.

15. Verfahren nach einem der Ansprüche 12 bis 14, wobei das Datennetz das Internet ist.

16. Verfahren zum Aufbau einer Datenbank, die Datennetz-Domänen mit nicht autorisierten Inhalten und Begriffen aufweist, bei dem Datennetz-Domänen, Datennetz-Seiten, Verbindungen und Linkadressen und Skripts nach nicht autorisierten Inhalten und/oder Begriffen durchsucht werden, wobei Begriffe mit Angaben zu Häufigkeit und Gefährdungsgrad ermittelt und mit dem Namen der zugehörigen Datennetz-Domäne über ein Kommunikationsnetzwerk an eine Datensammelstation geliefert werden, wobei ein Vergleich der ermittelten Begriffe mit Begriffen einer Datenbank mit nicht autorisierten Begriffen in der Datensammelstation nicht autorisierte Datennetz-Domänen zur Speicherung in der Datenbank für nicht autorisierte Datennetz-Domänen liefert.

17. Verfahren nach Anspruch 16, wobei zur Suche ein Suchroboter verwendet wird.

18. Verfahren nach Anspruch 16 oder 17, wobei die durchsuchte Datennetz-Domäne in die Datenbank aufgenommen wird, sofern kinder- und jugendgefährdende Inhalte und/oder Begriffe ermittelt werden.

19. Computerlesbares Medium, welches Daten enthält, die von einem Computer verwendbar sind um das Verfahren von Anspruch 12 oder 16 auszuführen, wobei die Daten untergliedert sind in nicht autorisierte, insbesondere kinder- und/oder jugendgefährdende Begriffe, Häufigkeit der Begriffe und Gefährdungsgrad der Begriffe, und welches ferner Namen von Datennetz-Domänen mit nicht autorisierten Inhalten enthält.

## Claims

1. A method for setting up a data network search engine for authorised data network domains comprising the steps:
(a) checking a data network domain for non-authorised contents and/or terms;
(b) inserting an identifier in the code of the checked domain; and
(c) registering the identified domain in the data network search engine,
wherein further an optical label is included into the checked data network domain in order to inform the user of the checking carried out,
wherein, depending on the frequency the domain is accessed, the registered data network domains are regularly checked for non-authorised contents and terms.

2. The method according to claim 1, wherein non-authorised contents and/or terms are terms morally endangering children and young persons.

3. The method according to claim 1 or 2, wherein step (a) comprises the checking of the name of the data network domain, the names of the individual sites of the data network domain, the content of the individual sites, connections and link addresses as well as scripts.

4. The method according to claim 2 or 3, wherein step (a) comprises the use of a database with terms morally endangering children and young persons.

5. The method according to any one of claims 1 to 4, wherein step (b) comprises the insertion of an identifier in the code of each site checked.

6. The method according to any one of claims 1 to 5, wherein the identifier reveals that a checking has been carried out and that the data network domain is authorised and in particular G-rated.

7. The method according to any one of claims 1 to 6, wherein in step (b) the identifier is automatically inserted.

8. The method according to any one of claims 1 to 7, wherein in step (c) the checked and identified domains are stored in the data network search engine according to contents or user profiles, in particular age groups.

9. The method according to claim 1, wherein the point in time of the most recent domain checking is stored in the data network search engine.

10. The method according to any one of claims 1 to 9, wherein the data network is the internet.

11. Use of a data network search engine set up according to any one of claims 1 to 10, wherein the data network search engine is automatically activated as soon as a user searches for non-authorised terms.

12. A method comprising the steps:
(a) providing a database comprising non-authorised terms;
(b) comparing a term or domain name/site name entered by a user in a data network search engine or in a data network browser with the terms stored in the database; and
(c) automatically activating a separate data network search engine containing only checked domains with authorised contents as soon as the term or name entered by the user has been found in the database.

13. The method according to claim 12, wherein the automatic activation of the separate search engine is carried out before the data network domain or site, respectively, entered by the user is called up.

14. The method according to claim 12 or 13, wherein the separate search engine is a data network search engine set up according to claims 1 to 10.

15. The method according to any one of claims 12 to 14, wherein the data network is the internet.

16. A method for setting up a database comprising data network domains with non-authorised contents and terms, wherein data network domains, data network sites, connections and link addresses and scripts are searched for non-authorised contents and/or terms, wherein terms are identified with indications concerning frequency and degree of danger and are delivered to a data collection station with the name of the corresponding data network domain via a communication network, wherein a comparison of the identified terms with terms of a database comprising non-authorised terms in the data collection station provides non-authorised data network domains for storing in the database for non-authorised data network domains.

17. The method according to claim 16, wherein a search robot is used for the search.

18. The method according to claim 16 or 17, wherein the data network domain searched is added into the database if contents and/or terms morally endangering children and young persons are identified.

19. A computer-readable medium containing data which may be used by a computer to carry out the method according to claim 12 or 16, wherein the data are partitioned into non-authorised terms, in particular terms morally endangering children and young persons, frequency of the terms and degree of danger of the terms, and wherein the medium further contains names of data network domains with non-authorised contents.

## Revendications

1. Procédé pour la constitution d'un moteur de recherche de réseau de données pour des domaines d'un réseau de données autorisés, comprenant les étapes consistant à :
a) contrôler un domaine d'un réseau de données au sujet de contenus et/ou de concepts non autorisés ;
b) introduire un marquage dans le code des domaines contrôlés ; et
c) enregistrer les domaines marqués dans le moteur de recherche de réseau de données,
dans lequel en outre, un cachet optique est introduit dans le domaine du réseau de données contrôlé, afin d'indiquer à un utilisateur la réussite du contrôle,
dans lequel les domaines du réseau de données enregistrés sont à nouveau régulièrement contrôlés au sujet de contenus et de concepts non autorisés en fonction de la fréquence de l'appel du domaine.

2. Procédé selon la revendication 1, dans lequel les contenus et/ou les concepts non autorisés sont des concepts dangereux pour les enfants et la jeunesse.

3. Procédé selon la revendication 1 ou 2, dans lequel à l'étape a) le nom du domaine du réseau de données, les noms de chacune des pages du domaine du réseau de données, le contenu de chacune des pages, les liaisons, les adresses de liens et les 20 scripts sont contrôlés.

4. Procédé selon la revendication 2 ou 3, dans lequel à l'étape a) une banque de données comprenant des concepts dangereux pour les enfants et la jeunesse est utilisée.

5. Procédé selon l'une des revendications 1 à 4, dans lequel à l'étape b) un marquage est introduit dans le code de chaque page contrôlée.

6. Procédé selon l'une des revendications 1 à 5, dans lequel le marquage indique qu'un contrôle a eu lieu et qu'il s'agit d'un domaine d'un réseau de données autorisé, en particulier libre d'accès pour les enfants et pour la jeunesse.

7. Procédé selon l'une des revendications 1 à 6, dans lequel à l'étape b), le marquage est automatiquement introduit.

8. Procédé selon l'une des revendications 1 à 7, dans lequel à l'étape c) les domaines contrôlés et marqués sont enregistrés dans le moteur de recherche de réseau de données selon les contenus ou selon les profils d'utilisateur, en particulier selon les tranches d'âge.

9. Procédé selon la revendication 1, dans lequel la date du dernier contrôle du domaine est enregistrée dans le moteur de recherche de réseau de données.

10. Procédé selon l'une des revendications 1 à 9, dans lequel le réseau de données est l'Internet.

11. Utilisation d'un moteur de recherche de réseau de données constitué selon l'une des revendications 1 à 10, dans laquelle le moteur de recherche de réseau de données est automatiquement activé dès qu'un utilisateur recherche des concepts non autorisés.

12. Procédé comprenant les étapes consistant à :
a) mettre à disposition une banque de données avec des concepts non autorisés ;
b) comparer un concept, ou un nom de domaine ou un nom de page tapé par un utilisateur dans un moteur de recherche de réseau de données ou dans un navigateur de réseau de données avec les concepts enregistrés dans la banque de données ; et
c) activer automatiquement un moteur de recherche de réseau de données séparé qui ne comprend que des domaines contrôlés avec des contenus autorisés dès que le concept ou le nom tapé par l'utilisateur a été trouvé dans la banque de données.

13. Procédé selon la revendication 12, dans lequel l'activation automatique du moteur de recherche séparé a lieu avant que le domaine ou, selon le cas, la page du réseau de données tapé par l'utilisateur soit appelé.

14. Procédé selon la revendication 12 ou 13, dans lequel le moteur de recherche séparé est un moteur de recherche de réseau de données constitué selon l'une des revendications 1 à 10.

15. Procédé selon l'une des revendications 12 à 14, dans lequel le réseau de données est l'Internet.

16. Procédé pour la constitution d'une banque de données qui comporte des domaines de réseau de données avec des contenus et des concepts non autorisés, dans lequel des domaines de réseau de données, des pages de réseau de données, des liaisons, des adresses de liens et des scripts sont contrôlés au sujet de contenus et/ou de concepts non autorisés, dans lequel des concepts sont découverts avec des indications sur la fréquence et le degré de dangerosité et sont délivrés par le biais d'un réseau de communication à une station de regroupement des données avec le nom des domaines du réseau de données s'y rapportant, dans lequel une comparaison des concepts découverts avec des concepts d'une banque de données comprenant des concepts non autorisés dans la station de regroupement des données délivre des domaines de réseau de donnés non autorisés pour les enregistrer dans la banque de données des domaines de réseau de données non autorisés.

17. Procédé selon la revendication 16, dans lequel un robot de recherche est utilisé pour la recherche.

18. Procédé selon la revendication 16 ou 17, dans lequel le domaine du réseau de données contrôlé est intégré dans la banque de données dans la mesure ou des contenus et/ou des concepts dangereux pour les enfants et la jeunesse sont découverts.

19. Média pouvant être lu par ordinateur, qui comprend des données pouvant être utilisées par un ordinateur afin d'exécuter le procédé de la revendication 12 ou 16, dans lequel les données sont subdivisées selon des concepts non autorisés, en particulier dangereux pour les enfants et/ou la jeunesse, selon la fréquence du concept et le degré de dangerosité du concept, et qui comprend en outre les noms de domaines de réseau de données avec des contenus non autorisés.
